# EUROPÄISCHE PATENTANMELDUNG

(11) **EP 1 555 845 A1**
(43) Veröffentlichungstag der Anmeldung: **20.07.2005**
(21) Anmeldenummer: 04000738.7
(22) Anmeldetag: 15.01.2004
(51) Int. Cl.: H04Q 7/38, G01S 5/02

(54) **Verfahren zur Positionsbestimmung von Teilnehmerstationen eines Funkkommunikationssystems**

(71) Anmelder: SIEMENS AKTIENGESELLSCHAFT, 80333 München (DE)
(72) Erfinder: Aigner, Clemens, 1210 Wien (AT); Böhm, Peter, 2732 Willendorf (AT); Otto, Manfred, 1040 Wien (AT)

(57) **Zusammenfassung**

Die Erfindung betrifft ein Verfahren zur Positionsbestimmung von Teilnehmerstationen (MS) in einem Funkkommunikationssystem. Netzseitig existiert für eine Mehrzahl von Positionen (POSITION_MS-AGPS) eine Zuordnung zu jeweils mindestens einer Empfangsstärke (RX_MS-AGPS) an der jeweiligen Position (POSITION_MS-AGPS) von mindestens einem von mindestens einer Basisstation (BS1, BS2, BS3) ausgestrahlten Signal (SIG1, SIG2, SIG3). Erfindungsgemäß werden zur Erstellung der Zuordnungen von Teilnehmerstationen (MS-AGPS) netzseitig empfangene ortsabhängige Informationen verwendet. Diese ortsabhängigen Informationen betreffen jeweils eine unter Verwendung von Satellitensignalen bestimmte Position (POSITION_MS-AGPS) der jeweiligen Teilnehmerstation (MS-AGPS) oder unter Verwendung von Satellitensignalen erhaltene Informationen, welche die Bestimmung der Position (POSITION_MS-AGPS) der jeweiligen Teilnehmerstation (MS-AGPS) ermöglichen, sowie mindestens eine von der jeweiligen Teilnehmerstation (MS-AGPS) erfahrene Empfangsstärke (RX_MS-AGPS) von mindestens einem von mindestens einer Basisstation (BS1, BS2, BS3) ausgestrahlten Signal (SIG1, SIG2, SIG3). Weiterhin betrifft die Erfindung eine Einrichtung (GMLC) zur Durchführung des Verfahrens.

## Beschreibung

Die Erfindung betrifft ein Verfahren zur Positionsbestimmung von Teilnehmerstationen in einem Funkkommunikationssystem und eine Einrichtung in einem Funkkommunikationssystem zur Positionsbestimmung.

In Funkkommunikationssystemen werden Informationen (beispielsweise Sprache, Bildinformation, Videoinformation, SMS (Short Message Service), MMS (Multimedia Messaging Service) oder andere Daten) mit Hilfe von elektromagnetischen Wellen über eine Funkschnittstelle zwischen sendender und empfangender Funkstation übertragen. Bei den Funkstationen handelt es sich auf Teilnehmerseite um Teilnehmerstationen wie z.B. Mobiltelefone oder mit Mobiltelefonmodems ausgestattete mobile Computer oder Steuerungsrechner, und netzseitig um Basisstationen bzw. Basistransmitterstationen (Base Transmitter Stations, BTS). Funkkommunikationssysteme können eine verbindungsorientierte Kommunikation zwischen Teilnehmerstationen ermöglichen. Das Abstrahlen der elektromagnetischen Wellen erfolgt dabei mit Trägerfrequenzen, die in dem für das jeweilige System vorgesehenen Frequenzband liegen. Beispiele für Funkkommunikationssysteme sind zellulare Systeme z.B. nach den Standards GSM (Global System for Mobile Communications), UMTS (Universal Mobile Telecommunications System), TETRA (Terrestrical Trunked Radio) Netze, oder auch WLANs (Wireless Local Area Networks) z.B. nach den Standards HIPERLAN oder IEEE 802.11.

Die Lokalisierung von Teilnehmerstationen in Funkkommunikationssystemen gewinnt zunehmend an Bedeutung. Zum einen gibt es in einigen Ländern gesetzliche Regelungen, welche die Netzbetreiber zur Positionsbestimmung von Notrufen verpflichten. Zum anderen findet eine Kommerzialisierung von ortsbezogenen Diensten statt, die eine zuverlässige Positionsbestimmung von Teilnehmerstationen voraussetzt.

Die Positionsbestimmung von Teilnehmerstationen kann netzseitig erfolgen. Beispiele für derartige Verfahren sind Cell ID-Verfahren, welche jedoch lediglich eine geringe Genauigkeit aufweisen. Genauere Verfahren wie z.B. EOTD (Enhanced Observed Time Difference) erfordern hingegen zusätzliche Investitionen im Netzwerk, wie z.B. zusätzliche SMLCs (Serving Mobile Location Centers) und LMUs (Loccation Measurement Units).

Mittels GPS (Global Positioning System) oder AGPS (Assisted GPS) kann die Positionsbestimmung in der Teilnehmerstation oder zumindest unter Mitwirkung der Teilnehmerstation erfolgen. Hierfür müssen die jeweiligen Teilnehmerstationen jedoch einen entsprechenden GPS-Empfänger aufweisen, was eine Zusatzinvestition auf Seiten der Endgeräte voraussetzt.

Bei der DCM (Database Correlation Method), welche z.B. in "Cellular Location Technology"¹ beschrieben ist, wird eine Datenbank erstellt, welche sogenannte "signal fingerprints" enthält, welche an verschiedenen Orten des Systems aufgenommen wurden. Die Einträge in der Datenbank können durch Messungen und/oder Berechnungen ermittelt werden. Die Vornahme von Messungen führt zwar zu einer höheren Genauigkeit bei der folgenden Positionsbestimmung, ist jedoch aufwendiger als die Durchführung von Berechnungen. Soll die Position einer Teilnehmerstation bestimmt werden, so nimmt diese die den Datenbankeinträgen entsprechenden Messungen vor und sendet die Ergebnisse an das Funknetz, welches die Datenbankeinträge mit den empfangenen Messergebnissen vergleicht, um die Position der Teilnehmerstation zu bestimmen.
¹: "Cellular Location Technology", IST (Information Society Technologies) Projekt, Project Number "IST-2000-25382-Cello", Project Title "Cellular network optimisation based on mobile location", herunterladbar von http://www.vtt.fi/tte/tte35/pdfs/CELLO-WP2-VTT-D03-007-Int.pdf

Der Erfindung liegt die Aufgabe zugrunde, ein Verfahren zur Positionsbestimmung in einem Funkkommunikationssystem aufzuzeigen, bei dem eine Datenbank mit ortsabhängigen Empfangsstärken von Basisstationssignalen verwendet wird. Weiterhin soll eine netzseitige Einrichtung zur Durchführung des Verfahrens aufgezeigt werden.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand von Unteransprüchen.

In dem Verfahren zur Positionsbestimmung von Teilnehmerstationen in einem Funkkommunikationssystem existiert netzseitig für eine Mehrzahl von Positionen eine Zuordnung zu jeweils mindestens einer Empfangsstärke an der jeweiligen Position von mindestens einem von mindestens einer Basisstation ausgestrahlten Signal. Erfindungsgemäß werden zur Erstellung der Zuordnungen von Teilnehmerstationen netzseitig empfangene ortsabhängige Informationen verwendet. Diese ortsabhängigen Informationen betreffen jeweils eine unter Verwendung von Satellitensignalen bestimmte Position der jeweiligen Teilnehmerstation oder unter Verwendung von Satellitensignalen erhaltene Informationen, welche die Bestimmung der Position der jeweiligen Teilnehmerstation ermöglichen, sowie mindestens eine von der jeweiligen Teilnehmerstation erfahrene Empfangsstärke von mindestens einem von mindestens einer Basisstation ausgestrahlten Signal.

Die netzseitigen Verfahrensschritte werden hierbei von einer oder mehreren Infrastruktureinrichtungen des Funkkommunikationssystems durchgeführt. Es kann sich hierbei zumindest teilweise auch um nicht dem sonstigen Kommunikationsbetrieb des Funkkommunikationssystems dienende Einrichtungen, z.B. von Diensteanbietern, handeln, welche mit Infrastruktureinrichtungen des Funkkommunikationssystems verbunden sind.

Die Zuordnungen, welche netzseitig existieren, sind vorzugsweise in einem geeigneten Speicher abrufbar abgelegt. Erfindungsgemäß werden sie unter Verwendung von ortsabhängigen Informationen erstellt, welche eine oder mehrere Infrastruktureinrichtungen des Funkkommunikationssystems von Teilnehmerstationen empfangen. Hierbei müssen die Zuordnungen jedoch nicht ausschließlich über die ortsabhängigen Informationen erstellt werden, so ist es zum Beispiel möglich, dass auch netzseitig durchgeführte Berechnungen und/oder Daten der Netzplanung in die Erstellung der Zuordnungen eingehen. Neben der Positionsbestimmung von Teilnehmerstationen können die erstellten Zuordnungen auch anderen Zwecken, wie zum Beispiel der Netzplanung, dienen.

Aufgrund der Zuordnungen ist somit für die jeweiligen Positionen jeweils mindestens ein Informationsdouble bestehend aus Basisstation und empfangbarerer Signalsstärke der Basisstation an der jeweiligen Position netzseitig bekannt. Vorzugsweise werden die Zuordnungen so erstellt, dass für alle im Abdeckungsbereich des Funkkommunikationssystems befindlichen Positionen netzseitig eine entsprechende Zuordnung existiert.

Zur Ermittlung der ortsabhängigen Informationen verwenden diejenigen Teilnehmerstationen, welche diese Informationen an das Netz senden, ein satellitengestütztes Verfahren. Diese Teilnehmerstationen müssen daher derart ausgestaltet sein, dass sie den Empfang und die Verarbeitung von Satellitensignalen ermöglichen. Das erfindungsgemäße Verfahren weist den Vorteil auf, dass Mobilstationen, deren Position unter Verwendung der erfindungsgemäß erstellten Zuordnungen bestimmt werden kann, nicht dazu ausgestattet sein müssen, ihre Position mittels Satellitensignalen zu bestimmen oder eine derartige Positionsbestimmung zumindest zu unterstützen. So können aufwendige GPS-fähige Teilnehmerstationen zur Erstellung der Zuordnungen eingesetzt werden, während einfacher gebaute, nicht GPS-fähige Teilnehmerstationen unter Verwendung der erstellten Zuordnungen lokalisiert werden können. In der Regel liegt in Funkkommunikationssystemen ein bestimmter Anteil an Teilnehmerstationen vor, welche GPS unterstützen, z.B. aufgrund des Wunsches, in Notfällen genau lokalisierbar zu sein, so dass deren GPS-Fähigkeit zur Positionsbestimmung der anderen, nicht GPS-fähigen, Teilnehmerstationen ausgenutzt werden kann.

Ein weiterer Vorteil der Erfindung ist, dass Teilnehmerstationen in Funkkommunikationssystemen in der Regel in regelmäßigen Zeitabständen die Feldstärken bzw. die Empfangsstärken von Signalen von Basisstationen messen und die Ergebnisse an das Netz senden. Daher sind zur Erstellung der Zuordnungen keine zusätzlichen Messungen nötig. Vielmehr kann immer dann, wenn eine GPS-fähige Teilnehmerstation ihre Position an das Netz übermittelt, aufgrund der Tatsache, dass die Teilnehmerstation auch die Ergebnisse der Empfangsstärkenmessung an das Netz übermitteln muss, eine neue Zuordnung erstellt bzw. eine bestehende Zuordnung überarbeitet oder bestätigt werden. Somit ist es möglich, dass die Erstellung der Zuordnungen während des regulären Betriebs der GPS-fähigen Teilnehmerstationen erfolgt, ohne dass der Einsatz von eigens zu diesem Zweck eingesetzten mobilen Messinstrumenten nötig ist. Die Erfindung erlaubt daher eine effiziente Erstellung und Aktualisierung der Zuordnungen zum Zwecke der Lokalisierung von Teilnehmerstationen während des regulären Betriebs des Funkkommunikationssystems.

In Weiterbildung der Erfindung wird zumindest ein Teil der erstellten Zuordnungen nach dem Empfang von ortsabhängigen Informationen modifiziert. Hierdurch ist eine zeitliche Veränderung bzw. Überarbeitung der Zuordnungen möglich, was dem in der Regel dynamischen Charakter von Funkkanälen zwischen Teilnehmerstationen und Basisstationen Rechnung trägt.

Einer Ausgestaltung der Erfindung gemäß werden die unter Verwendung von Satellitensignalen bestimmten Positionen oder die unter Verwendung von Satellitensignalen erhaltenen Informationen unter Verwendung eines GPS-Verfahrens, wie zum Beispiel eines normalen GPS-Verfahrens oder eines AGPS-Verfahrens, erhalten.

Es ist vorteilhaft, wenn die ortsabhängigen Informationen neben der mindestens einen von der jeweiligen Teilnehmerstation erfahrenen Empfangsstärke von mindestens einem von mindestens einer Basisstation ausgestrahlten Signal weiterhin Identifikationsinformation der mindestens einen Basisstation umfassen. Diese Identifikationsinformationen der jeweiligen Basisstationen können dann in die Erstellung und/oder Überarbeitung der netzseitigen Zuordnungen eingehen.

In Weiterbildung der Erfindung werden netzseitig von einer Teilnehmerstation, deren Position zu bestimmen ist, Informationen empfangen über mindestens eine von der Teilnehmerstation erfahrene Empfangsstärke von mindestens einem von mindestens einer Basisstation ausgestrahlten Signal. Weiterhin erfolgt die Positionsbestimmung der Teilnehmerstation unter Verwendung eines Vergleichs von Zuordnungen mit den empfangenen Informationen über die mindestens eine von der Teilnehmerstation erfahrene Empfangsstärke.

Die oben genannte Aufgabe hinsichtlich einer Einrichtung zur Positionsbestimmung wird durch eine Einrichtung mit den Merkmalen des Anspruchs 6 gelöst.

Vorteilhafte Ausgestaltungen und Weiterbildungen sind Gegenstand von weiteren Unteransprüchen.

Die Einrichtung in einem Funkkommunikationssystem zur Positionsbestimmung von Teilnehmerstationen weist Mittel zum Speichern einer Zuordnung für eine Mehrzahl von Positionen zu jeweils mindesten einer Empfangsstärke an der jeweiligen Position von mindestens einem von mindestens einer Basisstation ausgestrahlten Signal auf. Erfindungsgemäß umfasst die Einrichtung weiterhin Mittel zum Empfangen von ortsabhängigen Information von Teilnehmerstationen, wobei diese ortsabhängigen Informationen jeweils betreffen: eine unter Verwendung von Satellitensignalen bestimmte Position der jeweiligen Teilnehmerstation oder unter Verwendung von Satellitensignalen erhaltene Informationen, welche die Bestimmung der Position der jeweiligen Teilnehmerstation ermöglichen, sowie mindestens eine von der jeweiligen Teilnehmerstation erfahrene Empfangsstärke von mindestens einem von mindestens einer Basisstation ausgestrahlten Signal. Weiterhin umfasst die erfindungsgemäße Einrichtung Mittel zum Erstellen der Zuordnungen unter Verwendung der empfangenen ortsabhängigen Informationen.

In Weiterbildung der Erfindung umfasst die Einrichtung Mittel zum Modifizieren von zumindest einem Teil der erstellten Zuordnungen nach dem Empfangen von ortsabhängigen Informationen.

Es ist vorteilhaft, wenn die Mittel zum Empfangen von ortsabhängigen Informationen derart ausgestaltet sind, dass neben der mindestens einen von der jeweiligen Teilnehmerstation erfahrenen Empfangsstärke von mindestens einem von mindestens einer Basisstation ausgestrahlten Signal weiterhin Identifikationsinformation der mindestens einen Basisstation empfangbar ist. Die Identifikationsinformationen der jeweiligen Basisstationen können dann bei der Erstellung, Speicherung und Aktualisierung der Zuordnungen verwendet werden.

In Weiterbildung der Erfindung weist die Einrichtung weiterhin auf: Mittel zum Empfangen von Informationen über mindestens eine von einer Teilnehmerstation, deren Position zu bestimmen ist, erfahrene Empfangsstärke von mindestens einem von mindestens einer Basisstation ausgestrahlten Signal, sowie Mittel zum Bestimmen der Position der Teilnehmerstation unter Verwendung eines Vergleichs von Zuordnungen mit den empfangenen Informationen über die mindestens eine von der Teilnehmerstation erfahrene Empfangsstärke.

Die erfindungsgemäße Einrichtung zur Positionsbestimmung eignet sich insbesondere zur Durchführung des erfindungsgemäßen Verfahrens, wobei dies auch auf die Ausgestaltungen und Weiterbildungen zutrifft. Hierzu kann sie weitere geeignete Mittel aufweisen. Die erfindungsgemäße Einrichtung zur Positionsbestimmung in einem Funkkommunikationssystem kann auch durch mehrere einzelne, miteinander verbundene Einrichtungen mit den jeweiligen Mitteln realisiert werden, wie z.B. durch ein SMLC (Serving Mobile Location Center) in Verbindung mit einem GMLC (Gateway Mobile Location Center).

Im folgenden wird die Erfindung anhand eines Ausführungsbeispiels näher erläutert. Dabei zeigen
- Figur 1:: einen Ausschnitt aus einem Funkkommunikationssystem,
- Figur 2:: einen Ausschnitt aus einer erfindungsgemäß erstellten Datenbank.

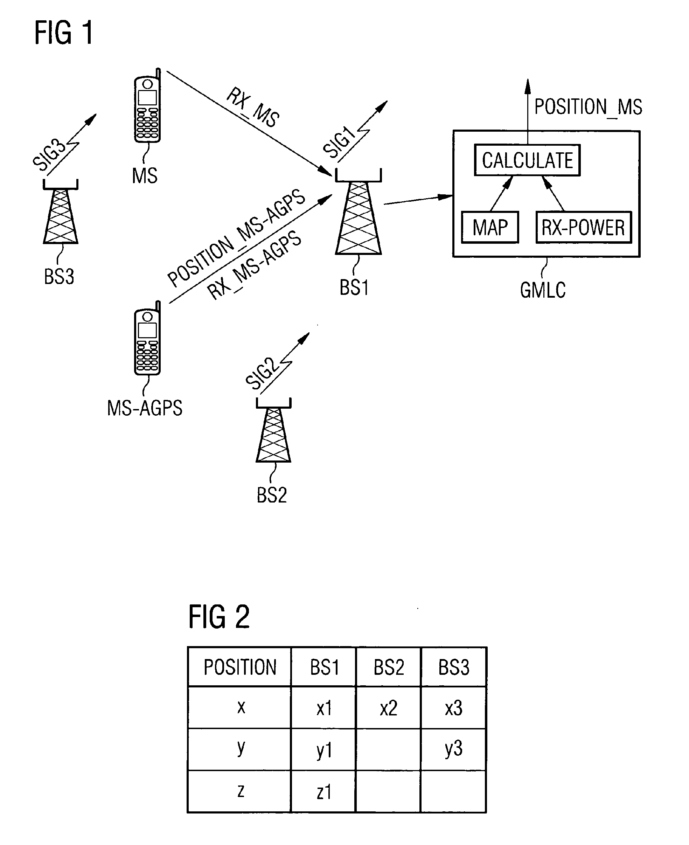

Der in Figur 1 dargestellte Ausschnitt aus einem zellularen Funkkommunikationssystem zeigt drei Basisstationen BS1, BS2 und BS3, sowie die beiden Mobilstationen MS und MS-AGPS. Weiterhin ist die Einrichtung GMLC Bestandteil der Infrastruktur des Funkkommunikationssystems. Weitere Infrastruktureinrichtungen des Funkkommunikationssystems neben den Basisstationen BS1, BS2 und BS3 und der Einrichtung GMLC, über welche z.B. die Basisstationen BS1, BS2 und BS3 mit der Einrichtung GMLC verbunden sein können, wie z.B. ein MSC (Mobile Switching Center), sind der Übersichtlichkeit halber nicht dargestellt.

Bei der Mobilstation MS-AGPS handelt es sich um eine Teilnehmerstation, welche eine Positionsbestimmung mittels AGPS (Assisted GPS) durchführen kann. Eine konventionellen satellitenbasierten Positionsbestimmung mittels GPS ermöglicht eine dreidimensionale Positionsbestimmung für die Teilnehmerstation. Teilnehmerstationen bekannter Funkkommunikationssysteme, beispielsweise gemäß dem GSM- und dem UMTS- Standard, müssen nicht mit einem vollständigen GPS-Empfänger ausgestattet sein, wenn zur Positionsbestimmung ein AGPS Verfahren verwendet wird, bei dem ein Teil der zur Positionsbestimmung über GPS benötigten Informationen nicht von der Teilnehmerstation, sondern von netzseitigen Einrichtungen bestimmt wird. Werden diese Informationen an die jeweilige Teilnehmerstation gesendet, so kann diese aus diesen empfangenen Informationen und den Satellitensignalen ihre Position bestimmen. Es ist auch möglich, dass die Teilnehmerstation die Berechnung ihrer Position nicht selber durchführt, sondern die hierzu benötigten, die Bestimmung der Position ermöglichenden Informationen den Satellitensignalen in Verbindung mit den vom Netz empfangenen Informationen entnimmt und zur vollständigen Berechnung der Position an das Netz sendet.

Während die Mobilstation MS-AGPS eine Positionsbestimmung über GPS unterstützt, ist dies bei der Mobilstation MS nicht der Fall. Hierdurch kann die Mobilstation MS einfacher gebaut sein als die Mobilstation MS-AGPS, indem sie keinen entsprechenden GPS-Empfänger umfasst. Außerdem weist die Mobilstation MS-AGPS bei Verwendung des GPS-Emfpängers einen erhöhten Energiebedarf auf, was sich in einer kürzeren Standby-Zeit des Akkus der Mobilstation MS-AGPS äußert.

Beide Mobilstationen MS und MS-AGPS messen in regelmäßigen Zeitabständen die Empfangsstärke von geeigneten von den Basisstationen BS1, BS2 und BS3 empfangenen Signalen SIG1, SIG2 und SIG3 und senden die Messergebnisse zusammen mit Identifikationsinformationen derjenigen Basisstationen, deren Signale SIG1, SIG2 und SIG3 sie ausgemessen haben, an die Basisstation, deren Funkzelle sie aktuell zugeordnet sind. Vorteilhafterweise handelt es sich bei den Signalen SIG1, SIG2 und SIG3, welche zur Messung der Empfangsstärken verwendet werden, um von der jeweiligen Basisstation per Broadcast ausgestrahlte Signale. Die Messwerte werden netzseitig z.B. für Handover-Entscheidungen zwischen den Funkzellen der jeweiligen Basisstationen BS1, BS2 und BS3 benötigt.

Dem gemäß sendet die Mobilstation MS-AGPS die Ergebnisse der von ihre durchgeführten Signalstärkemessungen RX_MS_AGPS an die Basisstation BS1. Vorteilhafterweise sollte die Mobilstation MS-AGPS zur Erhöhung der Genauigkeit der im folgenden beschriebenen Positionsbestimmung Messungen an Signalen von möglichst vielen Basisstationen, deren Signale sie empfangen kann, durchführen und an die Basisstation BS1 weiterleiten. Empfängt die Mobilstation MS-AGPS die Signale SIG1, SIG2 und SIG3 aller drei Basisstationen BS1, BS2 und BS3, so sollten sich die Ergebnisse der von ihre an die Basisstation BS1 weitergeleiteten Signalstärkemessungen RX_MS-AGPS auf alle drei Basisstationen BS1, BS2 und BS3 beziehen. Weiterhin ermittelt die Mobilstation MS-AGPS gemäß dem AGPS Verfahren ihre aktuelle Position POSITION_MS-AGPS und übermittelt diese an die Basisstation BS1, welche die beiden Größen RX_MS_AGPS und POSITION_MS-AGPS an die Einrichtung GMLC weiterleitet. Die Übertragung der Informationen RX_MS_AGPS und POSITION_MS-AGPS von der Basisstation BS1 an die Einrichtung GMLC kann auf verschiedene an sich bekannte Weisen erfolgen.

Die Positionsbestimmung der Mobilstation MS-AGPS muss nicht ausschließlich für den Zweck der Erfindung erfolgen. Vielmehr kann die Mobilstation MS-AGPS ihre Position POSITION_MS-AGPS im Rahmen eines von ihr unabhängig von der Erfindung in Anspruch genommenen ortsbezogenen Dienstes an die Basisstation BS1 übermitteln.

In dem Teil MAP der Einrichtung GMLC werden die ortsabhängigen Informationen RX_MS_AGPS und POSITION_MS-AGPS empfangen und gespeichert, wodurch eine Datenbank erstellt bzw. ergänzt oder verbessert wird. Diese enthält für eine Vielzahl von Positionen jeweils die Empfangsstärke von Signalen von einer oder mehreren Basisstationen an dieser Position. Somit entspricht die Datenbank einem Feldstärkenmodell des Funkkommunikationssystems entsprechend einem digitalen Höhenmodell über der Fläche des Funkkommunikationssystems. Bei Empfang von Empfangsstärkemessungen für eine Position, welche bereits als Eintrag in der Datenbank gespeichert ist, kann dieser Eintrag bei Vorliegen von Abweichungen überarbeitet bzw. überschrieben werden. Somit ist es möglich, die Datenbank bei Veränderungen, wie z.B. bei für die Funkausbreitung neu hinzugekommen Hindernissen, wie z.B. große Gebäude, zu aktualisieren. Es ist auch möglich, dass der Teil MAP nicht Teil der Einrichtung GMLC, sondern einer anderen netzseitigen Einrichtung ist, wobei die Einrichtung GMLC auf die Datenbank zugreifen kann bzw. Informationen von dort abfragen kann.

Figur 2 zeigt einen Ausschnitt aus einer beispielhaften Datenbank, welche in dem Teil MAP der Einrichtung GMLC gespeichert sein kann, wobei der Ausschnitt sich in Bezug auf die Anzahl der Spalten auf die in Figur 1 dargestellten Basisstationen BS1, BS2 und BS3 beschränkt. Es existieren für die drei Positionen x, y und z Zuordnungen zu Empfangsstärken von Basisstationssignalen an dem jeweiligen Ort. Für die Position x liegt eine Empfangsstärkenwert von x1 in Bezug auf die Basisstation BS1, von x2 in Bezug auf die Basisstation BS2 und von x3 in Bezug auf die Basisstation BS3 vor. Betreffend die Position y ist ein Wert von y1 in Bezug auf Signale der Basisstation BS1 und von y3 in Bezug auf Signale der Basisstation BS3 gespeichert. Für die Position z hingegen ist ausschließlich ein Wert von z1 als Messergebnis der Signalstärke der Basisstation BS1 vorhanden. Im allgemeinen kann für jede Position somit eine oder mehrere Empfangsstärken gespeichert werden. Die Anzahl der an der jeweiligen Position empfangbaren Basisstationen hängt u.a. von der Größe der Zellen der jeweiligen Basisstationen ab, so dass bei sinkender Zellgröße in der Regel die Anzahl der Basisstationen, von welchen Signale empfangen werden können, zunimmt.

Die Bestimmung der Position POSITION_MS-AGPS und die Messung der Signalstärken RX_MS-AGPS muss nicht exakt am gleichen Ort stattfinden, so dass die Bewegung der Mobilstation MS-AGPS während der Durchführung er jeweiligen Messungen möglich ist. Die Größe des erlaubten Positionsunterschiedes zwischen der Durchführung der Positionsbestimmung und der Signalstärkemessungen hängt von der erwünschten Genauigkeit des Positionsbestimmungsverfahrens, für welches die Datenbank eingesetzt werden soll, ab.

Im folgenden soll die Position der Mobilstation MS bestimmt werden. Hierzu sendet die Mobilstation MS die Ergebnisse der von ihr durchgeführten Signalstärkemessungen RX_MS an die Basisstation BS, welche diese an die Einrichtung GMLC weiterleitet. Wie auch in Bezug auf die Signalstärkemessungen der Mobilstation MS-AGPS ist es für die Genauigkeit der Positionsbestimmung der Mobilstation MS vorteilhaft, wenn sie Messergebnisse für möglichst viele Basisstationen sendet. Im Teil RX-POWER der Einrichtung GMLC werden die Ergebnisse der Signalstärkemessungen RX_MS empfangen. Der Teil CALCULATE der Einrichtung GMLC führt einen Vergleich der im Teil MAP gespeicherten Informationen mit den Ergebnissen der Signalstärkemessungen RX_MS der Mobilstation MS durch, um somit die Position POSITION_MS der Mobilstation MS zu bestimmen.

Aufgrund des beschriebenen Vorgehens kann die Mobilstation MS in Bezug auf ihre Lokalisierung von der AGPS-Fähigkeit der Mobilstation MS-AGPS profitieren.

## Patentansprüche

1. Verfahren zur Positionsbestimmung von Teilnehmerstationen (MS) in einem Funkkommunikationssystem,
bei dem netzseitig für eine Mehrzahl von Positionen (POSITION_MS-AGPS: x, y, z) eine Zuordnung existiert zu jeweils mindestens einer Empfangsstärke (RX_MS-AGPS; x1, x2, x3, y1, y3, z1) an der jeweiligen Position (POSITION_MS-AGPS; x, y, z) von mindestens einem von mindestens einer Basisstation (BS1, BS2, BS3) ausgestrahlten Signal (SIG1, SIG2, SIG3),
**dadurch gekennzeichnet,**
**dass** zur Erstellung der Zuordnungen von Teilnehmerstationen (MS-AGPS) netzseitig empfangene ortsabhängige Informationen verwendet werden, jeweils betreffend
• weine unter Verwendung von Satellitensignalen bestimmte Position (POSITION_MS-AGPS; x, y, z) der jeweiligen Teilnehmerstation (MS-AGPS) oder unter Verwendung von Satellitensignalen erhaltene Informationen, welche die Bestimmung der Position (POSITION_MS-AGPS; x, y, z) der jeweiligen Teilnehmerstation (MS-AGPS) ermöglichen, und
• mindestens eine von der jeweiligen Teilnehmerstation (MS-AGPS) erfahrene Empfangsstärke (RX_MS-AGPS; x1, x2, x3, y1, y3, z1) von mindestens einem von mindestens einer Basisstation (BS1, BS2, BS3) ausgestrahlten Signal (SIG1, SIG2, SIG3).

2. Verfahren nach Anspruch 1, **dadurch gekennzeichnet,**
**dass** zumindest ein Teil der erstellten Zuordnungen nach dem Empfang von ortsabhängigen Informationen modifiziert wird.

3. Verfahren nach Anspruch 1 oder 2, **dadurch gekennzeichnet,**
**dass** die unter Verwendung von Satellitensignalen bestimmte Position (POSITION_MS-AGPS; x, y, z) oder die unter Verwendung von Satellitensignalen erhaltenen Informationen unter Verwendung eines GPS Verfahrens erhalten werden.

4. Verfahren nach einem der Ansprüche 1 bis 3, **dadurch gekennzeichnet,**
**dass** die ortsabhängigen Informationen neben der mindestens einen von der jeweiligen Teilnehmerstation (MS-AGPS) erfahrenen Empfangsstärke (RX_MS-AGPS; x1, x2, x3, y1, y3, z1) von mindestens einem von mindestens einer Basisstation (BS1, BS2, BS3) ausgestrahlten Signal (SIG1, SIG2, SIG3) weiterhin Identifikationsinformation der mindestens einen Basisstation (BS1, BS2, BS3) umfassen.

5. Verfahren nach einem der Ansprüche 1 bis 4, **dadurch gekennzeichnet, dass** netzseitig
- von einer Teilnehmerstation (MS), deren Position (POSITION_MS) zu bestimmen ist, Informationen empfangen werden über mindestens eine von der Teilnehmerstation (MS) erfahrene Empfangsstärke (RX_MS) von mindestens einem von mindestens einer Basisstation (BS1, BS2, BS3) ausgestrahlten Signal (SIG1, SIG2, SIG3), und
- die Positionsbestimmung der Teilnehmerstation (MS) unter Verwendung eines Vergleichs von Zuordnungen mit den empfangenen Informationen über die mindestens eine von der Teilnehmerstation (MS) erfahrene Empfangsstärke (RX_MS) erfolgt.

6. Einrichtung (GMLC) in einem Funkkommunikationssystem zur Positionsbestimmung von Teilnehmerstationen (MS),
mit Mitteln (MAP) zum Speichern einer Zuordnung für eine Mehrzahl von Positionen (POSITION_MS-AGPS; x, y, z) zu jeweils mindestens einer Empfangsstärke (RX_MS-AGPS; x1, x2, x3, y1, y3, z1) an der jeweiligen Position (POSITION_MS-AGPS; x, y, z) von mindestens einem von mindestens einer Basisstation (BS1, BS2, BS3) ausgestrahlten Signal (SIG1, SIG2, SIG3),
**dadurch gekennzeichnet,**
**dass** sie aufweist:
- Mittel (MAP) zum Empfangen von ortsabhängigen Informationen von Teilnehmerstationen (MS-AGPS), jeweils betreffend
• eine unter Verwendung von Satellitensignalen bestimmte Position (POSITION_MS-AGPS; x, y, z) der jeweiligen Teilnehmerstation (MS-AGPS) oder unter Verwendung von Satellitensignalen erhaltene Informationen, welche die Bestimmung der Position (POSITION_MS-AGPS; x, y, z) der jeweiligen Teilnehmerstation (MS-AGPS) ermöglichen, und
• mindestens eine von der jeweiligen Teilnehmerstation (MS-AGPS) erfahrene Empfangsstärke (RX_MS-AGPS; x1, x2, x3,y1 , y3, z1) von mindestens einem von mindestens einer Basisstation (BS1, BS2, BS3) ausgestrahlten Signal (SIG1, SIG2, SIG3), und
- Mittel (MAP) zum Erstellen der Zuordnungen unter Verwendung der empfangenen ortsabhängigen Informationen.

7. Einrichtung (GMLC) nach Anspruch 6, mit
Mitteln zum Modifizieren von zumindest einem Teil der erstellten Zuordnungen nach dem Empfang von ortsabhängigen Informationen.

8. Einrichtung (GMLC) nach Anspruch 6 oder 7,
wobei die Mittel (MAP) zum Empfangen von ortsabhängigen Informationen derart ausgestaltet sind, dass neben der mindestens einen von der jeweiligen Teilnehmerstation (MS-AGPS) erfahrenen Empfangsstärke (RX_MS-AGPS; x1, x2, x3, y1, y3, z1) von mindestens einem von mindestens einer Basisstation (BS1, BS2, BS3) ausgestrahlten Signal (SIG1, SIG2, SIG3) weiterhin Identifikationsinformation der mindestens einen Basisstation (BS1, BS2, BS3) empfangbar ist.

9. Einrichtung (GMLC) nach einem der Ansprüche 6 bis 8, mit
- Mitteln (RX-POWER) zum Empfangen von Informationen über mindestens eine von einer Teilnehmerstation (MS), deren Position (POSITION_MS) zu bestimmen ist, erfahrene Empfangsstärke (RX_MS) von mindestens einem von mindestens einer Basisstation (BS1, BS2, BS3) ausgestrahlten Signal (SIG1, SIG2, SIG3), und
- Mitteln (CALCULATE) zum Bestimmen der Position (POSITION_MS) der Teilnehmerstation (MS) unter Verwendung eines Vergleichs von Zuordnungen mit den empfangenen Informationen über die mindestens eine von der Teilnehmerstation (MS) erfahrene Empfangsstärke (RX_MS).
